# EUROPEAN PATENT APPLICATION

(11) **EP 1 589 724 A2**
(43) Date of publication of application: **26.10.2005**
(21) Application number: 05252503.7
(22) Date of filing: 21.04.2005
(51) Int. Cl.: H04L 29/06, H04L 12/26

(54) **Packet switched network**

(30) Priority: 23.04.2004 US 830999
(71) Applicant: Agilent Technologies, Inc., Palo Alto, CA 94306 (US)
(72) Inventor: Pollock, Graham S., Folsom, CA 95630 (US); Whitner, Richard B., Fort Collins, CO 80526 (US)
(74) Representative: Powell, Stephen David

(57) **Abstract**

Systems and methods for computing the demand placed on a packet-swtched network (11) by streaming media (101, 102, 103) use the signaling messages (101ₛ, 102ₛ, 103ₛ) associated with streaming media communications, such as H.225.0 signaling messages associated with Voice over IP (VoIP) telephony communications, to compute the demand placed on the packet-switched network by the streaming media communications. The computer demands are used to construct a traffic matrix for the packet-switched network, which may be used by a streaming communication service provider to monitor its quality of service and/or perform capacity planning, as examples.

## Description

The present invention relates generally to streaming media communication over a packet-switched network, such as Voice over IP (VoIP), and more particularly to systems and methods for computing demand placed on a packet-switched network by streaming media communication, wherein such demand may be used, for instance, in constructing a traffic matrix for the packet-switched network.

Streaming media, such as voice telephony calls, have traditionally been communicated over circuit-switched networks. In general, a circuit-switched network is a type of network in which a physical path is obtained for and dedicated to a single connection between two end-points in the network for the duration of the connection. Increasingly, packet-switched networks (sometimes referred to as "data networks"), such as the Internet, are being used for communicating streaming media, such as telephone calls, videoconferences, multimedia presentations, etc. In general, a packet-switched network is one in which relatively small units of data called packets are routed through a network based on the destination address contained within each packet. Breaking the communication down into packets allows the same data path to be shared among many users in the network. This type of communication between sender and receiver is known as "connectionless" (rather than the "dedicated" type of communication between sender and receiver in a circuit-switched network).

One example of streaming media that is increasingly being communicated via packet-switched networks is telephony communication. For instance, the Internet Protocol (IP) is a packet-based protocol that is being used for communicating streaming media, such as telephone calls, over an IP network (e.g., the Internet, an intranet, etc.). The term Voice over IP ("VoIP") has become popular, and encompasses a number of protocols that are tasked with transmitting voice and video over IP networks. Generally, in a VoIP network, analog speech signals received from an analog speech audio source, for example a Public Switched Telephony Network (PSTN) or a microphone, are digitized, compressed, and translated into IP packets for transmission over an IP network. Several well-known protocols are used for implementing VoIP, including the International Telecommunication Union (ITU) H.323 Standard (hereafter "H.323"), Session Initialization Protocol ("SIP"), Master Gateway Control Protocol ("MGCP"), and the real-time protocol ("RTP").

Various other types of streaming media communication are available over packet-switched networks, such as IP networks, including without limitation streaming videoconferences, streaming audio (e.g., streaming radio broadcasts), streaming video and/or audio-video (e.g., streaming movies or news clips), streaming multimedia presentations, etc. As used herein, streaming media communication refers to any type of streaming communication in which a portion of the communication is available for presentation at a recipient before the full communication is received. In many instances, such as with VoIP communication, the streaming communication is a "live" communication between the parties involved. In other instances, such as with streaming pre-recorded news clips, the communication is not "live" but is instead pre-recorded information being communicated to the recipient. In some instances, the streaming communication is bi-directional, as with VoIP. In other instances, the streaming communication may be uni-directional, as with a pre-recorded news clip being streamed to a recipient with no return communication being streamed from the recipient. Thus, as used herein, streaming media communications refers to any streaming communication, which may be a "live" or "pre-recorded" communication and which may be a uni-directional or bi-directional communication, unless accompanying terms specify otherwise in a given context.

With such streaming services being provided over packet-switched networks, a desire has arisen for the service providers offering such streaming services to manage the Quality of Service (QoS) of their services. If their networks do not have sufficient capacity for supporting the users' demands, the service providers' QoS will suffer. While various technologies have been implemented in circuit-switched networks for computing and monitoring the demand placed on such circuit-switched networks by the traffic carried thereby, packet-switched networks are largely lacking such technologies for computing and monitoring demand. This is at least partially due to the different nature in which these networks were traditionally used. For instance, because circuit-switched networks establish dedicated paths between end-points used for supporting streaming communication (e.g., telephone call, fax, etc.), techniques for monitoring the demand on various parts of the network were developed to enable the service providers to monitor their capacity for servicing their customer traffic and plan for future growth. However, packet-switched networks have traditionally not had the QoS concerns that exist with such streaming types of communication as telephony, etc. Rather, packet-switched networks have traditionally been used for communicating files in a non-streaming fashion. For instance, traditionally a file, such as an e-mail, etc., is communicated from a sender to a recipient, wherein the file is broken into packets that are distributed over the packet-switched network, reassembled at the recipient, and is then available for presentation to the recipient, as opposed to streaming communication in which a portion of the communication is available for presentation at a recipient before the full communication is received.

With the increase in streaming communications being conducted over packet-switched networks, a desire for managing the QoS of such streaming communications has arisen. With circuit-switched networks, for example, traffic matrices are commonly computed within the network to reflect the demands placed on various portions of the network. Typically, the demand placed on a network is represented by a set of point-to-point demands between access devices in the network. A point-to-point demand is the required capacity of the aggregated set of calls between the endpoints over an interval of time. The collection of all of the demands of a circuit-switched network is commonly constructed into a traffic matrix. A desire for monitoring the demand on a packet-switched network in supporting streaming media communication, such as with construction of a traffic matrix, exists.

The present invention is directed to systems and methods which compute the demand placed on a packet-switched network by streaming media carried by such packet-switched network. More particularly, systems and methods are provided that use the signaling messages associated with streaming media communications over a packet-switched network, such as H.225.0, SIP, or MGCP signaling messages associated with VoIP telephony communications, to compute the demand placed on the packet-switched network by the streaming media communications. The demand may be reflected in any of several different ways, including without limitation the duration of actual streaming data (e.g., duration of voice communication of a VoIP telephony communication), the bandwidth consumed by streaming media sessions between various points in the packet-switched network, and/or the number (e.g., maximum number) of concurrent streaming media sessions conducted between various points in the packet-switched network. Embodiments of the present invention, utilize signaling messages to compute demand (e.g., one of the above-identified representations of demand) for a packet-switched network resulting from streaming media sessions carried by such packet-switched network.

In certain embodiments, the computed demands are used to construct a traffic matrix for the packet-switched network, which may be used by a streaming communication service provider to carry out traffic engineering and/or perform capacity planning, as examples. Such traffic matrix may include, for example, information representing the demand in any of the above-identified manners.

Accordingly, the signaling information associated with streaming media sessions (e.g., VoIP calls) may be used to build up information regarding each streaming media session, such as its duration, source and destination, etc. By using the signaling information in this regard, the volume of data involved is significantly smaller than with the actual data being communicated in a streaming media session (e.g., every packet carrying voice in a telephone call). Typically, signaling information is carried on a relatively small number of links, as well, because it is passing to some particularly well-known devices in the network. So, using signaling information to compute demand (and build-up a traffic matrix) is an attractive approach because a significantly smaller amount of data is involved than techniques that involve observing the raw packets (actual data) themselves, and typically a small subset of the links in the network may be monitored for capturing the signaling messages whereas a much larger number of links may require monitoring for observing the raw packets.

According to at least one embodiment, a method comprises capturing signaling messages associated with streaming media communicated over a packet-switched network. The method further comprises computing, based at least in part on the captured signaling messages, a demand placed on the packet-switched network. In certain implementations, the signaling messages are of a protocol, such as H.225.0, SIP, MGCP, and MEGACO, as examples, that is used for communicating such signaling messages for packet-based streaming communications.

According to at least one embodiment, a method for constructing a traffic matrix for streaming media communicated at least partly over a packet-switched network is provided. The method comprises capturing signaling messages of a packet-based protocol used for communicating the streaming media over the packet-switched network. The method further comprises using the signaling messages to construct a traffic matrix for the packet-switched network.

According to at least one embodiment, a method of monitoring a packet-switched network is provided. The method comprises capturing, for at least one interval of time, signaling messages of streaming media sessions communicated over a packet-switched network, and identifying a streaming media session to which each signaling message corresponds. The method further comprises timestamping a captured setup signaling message, and timestamping a captured teardown signaling message. The method also comprises determining the duration of each streaming media session based on the captured signaling messages. It should be understood that "setup" signaling messages and "teardown" signaling messages refer to functions of setting up (or initializing) and of tearing down (or terminating) a streaming media session, respectively, and are not limited to signaling messages that are specifically referred to as "setup" and "teardown" messages. For instance, in certain signaling protocols the signaling messages that perform these functions are not referred to as "setup" and "teardown" signaling messages, but instead have different names. That is, the specific signaling messages that perform these functions may vary from protocol to protocol. For example, in the H.225.0 Call Signaling protocol the "Connect" signaling message is an indication that the parties involved in a call have successfully established (i.e. setup) a communication channel and that communication is now taking place. The H.225.0 "Release Complete" message is an example of a signaling message which indicates that the communication between the involved parties is finished and that the call can be torn down. As used herein, "setup" and "teardown" signaling messages are used generically and are intended to refer to any types of signaling messages that perform these respective functions.

According to at least one embodiment, a system comprises a packet-switched network. The system further comprises means for capturing signaling messages for streaming media communicated over the packet-switched network, and means for computing demand information for the packet-switched network based at least in part on the captured signaling messages.

According to at least one embodiment, a probe comprises at least one interface for receiving signaling messages of a packet-based protocol that is used for communicating streaming media over a packet-switched network. The probe further comprises a processor operable to compute demand information for the packet-switched network based at least in part on the captured signaling messages.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated that the conception and specific embodiment disclosed may be readily utilized as a basis for modifying or designing other structures for carrying out the same purposes of the present invention. It should also be realized that such equivalent constructions do not depart from the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

For a more complete understanding of the present invention, reference is now made to the following descriptions taken in conjunction with the accompanying drawing, in which:

FIGURE 1 shows an example system implementing an embodiment of the present invention that captures signaling messages associated with streaming media communication over a packet-switched network for determining the demand placed on such packet-switched network;

FIGURE 2 shows an example system implementing an embodiment that captures signaling messages associated with streaming media communication over a packet-switched network for determining the demand placed on such packet-switched network, wherein the streaming communication is carried by both a circuit-switched network and a packet-switched network;

FIGURE 3 shows another example system implementing an embodiment that captures signaling messages associated with streaming media communication over a packet-switched network for determining the demand placed on such packet-switched network, wherein the streaming communication is carried by both a circuit-switched network and a packet-switched network;

FIGURE 4 shows a block diagram of an example probe that may be used for certain embodiments for capturing signaling messages associated with streaming media communication over a packet-switched network and determining, based at least in part on the captured signaling messages, the demand placed on such packet-switched network;

FIGURE 5 shows an example operational flow diagram for one embodiment of the present invention; and

FIGURES 6A-6B show a more detailed operational flow for one embodiment of the present invention for computing the demand placed on a packet-switched network by streaming media communications.

Various embodiments of the present invention for monitoring demand placed on a packet-switched network by streaming media communications are described below with reference to the above figures. As described further below, embodiments are provided in which signaling messages of a packet-based protocol are used for monitoring the demand placed on a packet-switched network by streaming media communications, such as telephony communications, videoconferencing communications, streaming audio (e.g., streaming radio broadcasts), streaming video and/or audio-video, and streaming multimedia presentations, as examples. In various implementations, such demand may be computed for bidirectional and/or unidirectional streams. Further, the streams for which the demand is computed may be "live" communication or communication of "pre-recorded" data. In accordance with certain embodiments, the signaling messages are used for constructing a traffic matrix for the packet-switched network.

A "demand" is the amount of streaming traffic (e.g., VoIP traffic) flowing between two points in the network. It can be measured, as examples, in terms of "data minutes" (e.g., "voice minutes" for a VoIP call) (or seconds), bandwidth between two specific points in the network, and/or number of concurrent streaming media sessions conducted between two specific points in the network. In one embodiment, the demand is initially measured in terms of data minutes and may then be converted to bandwidth and/or maximum number of concurrent streaming media sessions (during a given time interval) for use, for example, in optimization tools. Each demand is uniquely identified by the fact that all calls which make up the demand flow between the same ingress and egress points and have the same Codec.

As described further below, many streaming media communications conducted over a packet-switched network utilize signaling messages for control of such streaming communications, in a manner similar to usage of the well-known Common Channel Signaling System No. 7 (commonly referred to as "SS7" or "C7") utilized for control of telephony communications over traditional circuit-switched networks. In general, the signaling messages associated with a streaming media communication are used for controlling the streaming media communication, such as for setting up and tearing down the communication.
As one example, the H.225.0 protocol is a signaling protocol typically used with VoIP communications, wherein the H.225.0 protocol is used for performing such control operations as setting up (which may be referred to as "connecting" or "initiating") the streaming telephony session between the communicating parties, as well as for tearing down (which may be referred to as "disconnecting" or "terminating") such streaming telephony session. Thus, such signaling messages are not the actual data (e.g., voice communication, etc.) that is to be communicated via the streaming media, but is instead typically separate messages that are used for control or management of the stream carrying the actual data. In additional to H.225.0, various other protocols, such as SIP, MGCP, and MEGACO, include signaling components that are known for use in controlling streaming media communications over a packet-switched network, and any such signaling message protocol now known or later developed may be utilized with the various embodiments described herein.

As mentioned above, solutions for generating traffic matrices exist for circuit-switched telephony networks. Solutions for generating traffic matrices for packet-switched networks, such as VoIP networks, are only recently emerging. Most existing solutions have as their basic approach computing the load using traffic measurements taken at the edges of the IP network (*see, e.g.,* U.S. Patent Application No. 20030086425, Bearden et al., "Network traffic generation and monitoring systems and methods for their use in testing frameworks for determining suitability of a network for target applications"). This basic approach of existing solutions uses probes, which could be the edge devices themselves (e.g., router MIBs), positioned at or near the endpoints of the IP network to capture the headers of all real-time protocol (RTP) traffic (i.e., the voice portion of a VoIP call) and aggregate it by source router IP address, destination router IP address, and other parameters such as codec, packet size, traffic class, and time captured. Data captured at each end are correlated using header information, and statistics can be calculated such as call duration and total packet size for individual calls passing through the endpoints. Individual calls can be aggregated over an interval, over all combinations of endpoints, to produce the traffic matrix.

These existing approaches for constructing a traffic matrix have various drawbacks. First, raw metrics from routers typically provide summary counter values that contain insufficient data to make conclusions about individual call flows. Further, flow metrics that can be collected from routers introduce a heavy processing load on the device and reduce its performance. Also, implementing sufficient numbers of probes to monitor all endpoints is expensive. Additionally, such probes would have to be sufficiently powerful to keep up with the large numbers of voice packets, as well as the general (non-voice) IP traffic (e.g., web traffic, file transfers, etc.), passing through each endpoint. Emerging Multi-Protocol Label Switching (MPLS) capabilities offer hope of per-path statistics that can be used, provided paths are dedicated exclusively to particular classes of traffic, such as voice only, and provided the MIBs supplying the data are implemented. Even when such MPLS capabilities are implemented in this manner (not yet the case), a considerable number of endpoints will have to be contacted on a regular basis to collect the desired data.

To deal with the limitations mentioned above, sampling and estimation techniques are often employed. Variations revolve around how the collected data are used to compute the traffic matrix. Those variations include the following techniques:
A) a crude approach is to estimate load using assumptions about voice load being proportional to the population at the endpoints, see *e.g.,* http://www.itu.int/ITU-D/tech/network-infrastructure/Bangkok-02/5-6Demo.pdf, ITU Seminar on Network Planning Strategy for Evolving Network Architectures for Asia Pacific Region;
B) another simple approach informally discussed in various circles estimates the traffic matrix using service level agreements;
C) more intelligent techniques formulate stochastic models based on sampled flow duration, arrival process, variation of bit-rate within a flow, and estimate the traffic matrix from those models, *see e.g.,* Mark Sheyman, http://www.umiacs.umd.edu/res/proj/menter/menteroverview.pdf, Laboratory for Communications Science, May 2001; and
D) an approach by Conway and Li, "Estimating the Traffic Distribution Matrix of a Packet-Switched Network Using Aggregate Traffic Measurements" uses linear programming techniques to determine the most optimal matrix that fits the collection of inflows and outflows on the network.

A drawback with any estimation technique is the accuracy of the estimation. In the case of modeling approaches, the smaller the sampling interval, the more accurate the model. However, this again presents difficulty when collecting and processing very large volumes of data from large numbers of resources.

As mentioned above, embodiments of the present invention utilize signaling messages associated with streaming media communications over a packet-switched network for computing the demand placed on the packet-switched network and, in some instances, constructing a traffic matrix for the packet-switched network. The amount of signaling traffic associated with a streaming media session (e.g., VoIP call) is typically orders of magnitude smaller than the actual data traffic of the streaming media session (e.g., the voice traffic of a VoIP call). As used herein, a "streaming media session" refers to a given streaming communication conducted between two or more parties, which is generally initiated with a signaling setup message and is terminated with a signaling teardown message. An example of a streaming media session is a VoIP call between two or more parties, wherein the session corresponds to the duration of the call. In some instances, a streaming media session may be referred to as a "streaming media call" herein, and it should be understood that such a streaming media call is not intended to be limited to a telephony call unless further clarifying language is used therewith, such as a "streaming media telephony call," but is instead intended to encompass any type of streaming communication (e.g., voice, video, multi-media presentation, etc.).

In contrast to monitoring the actual data portion (e.g., the voice portion of a VoIP call), monitoring the signaling portion can be done with considerably fewer probes. This is because the signaling messages associated with each streaming media session (e.g., each VoIP call) are sent to controller devices, such as soft switches, of which there are considerably fewer in the network than the number of router endpoints at the edge of the network. This results in considerably less compute-intensive processing than in the above-described existing techniques, since each streaming media session (e.g., each VoIP call) involves only a small number of signaling packets to handle setup, tear down, etc. Further, because the signaling messages demark the beginning and ending of the streaming media session at each endpoint of the session, and often carry encoding information that can be used to compute the volume of data per unit transferred, the measurements can be precise. In summary, an accurate, more cost-effective, and easier-to-manage demand computation (and traffic matrix generation) solution for packet-switched networks is achieved with embodiments of the present invention.

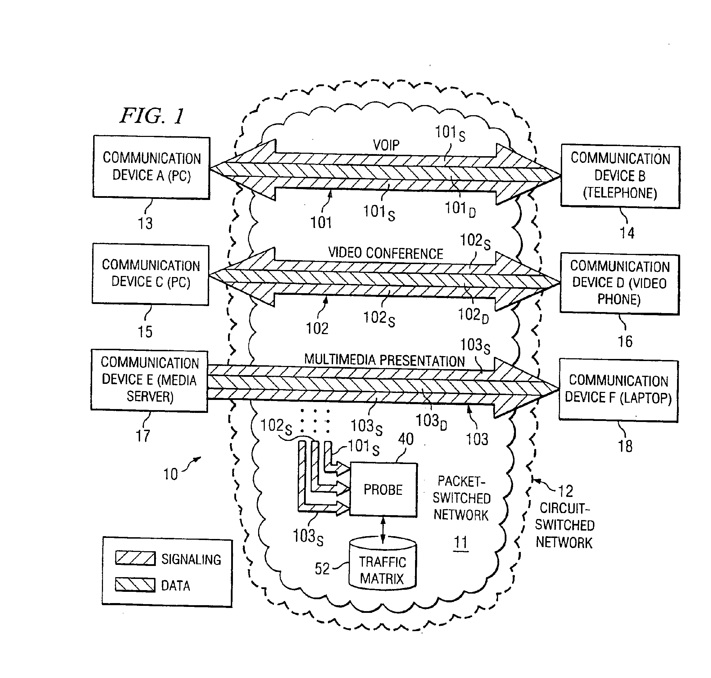

Turning to FIGURE 1, an example system 10 is shown implementing an embodiment of the present invention. As shown, system 10 comprises a packet-switched network 11 over which streaming communications may be carried. Packet-switched network 11 may be the Internet, an intranet, any other local-area (LAN) or wide-area (WAN) packet-switched network, or any combination thereof, as examples. In this specific example, streaming communications 101, 102, and 103 are carried at least partly by packet-switched network 11. As shown in dashed lines (as being optional), in some instances, a circuit-switched network 12 is also used for carrying the communication. Circuit-switched network 12 may be a public-switched telephony network (PSTN) and/or other local or wide-area circuit-switched network, as examples. That is, circuit-switched network 12 may carry the streaming communication for a portion of the distance between the communicating parties, and circuit-switched network 12 may interface with packet-switched network 11, which carries the streaming communication a portion of the distance between the communicating parties. For example, in some cases, the communicating parties interface with circuit-switched network 12, and circuit-switched network 12 couples to packet-switched network 11 for carrying the streaming communication.

In the specific example of FIGURE 1, streaming internet telephony communication 101 (using VoIP) is communicated between communication device A 13 and communication device B 14. In this example, communication device A 13 is a personal computer (PC) and communication device B 14 is a standard (or mobile) telephone. Of course, other devices suitable for performing telephony communication may be used instead. Thus, voice communication is conducted between a first party using communication device A 13 and a second party using communication device B 14.

Further, in the example of FIGURE 1, streaming video conferencing 102 is communicated between communication device C 15 and communication device D 16. In this example, communication device C 15 is a PC and communication device D 16 is a video phone. Of course, other devices suitable for performing video conferencing communication may be used instead. Thus, corresponding video and voice communication is conducted between a first party using communication device C 15 and a second party using communication device D 16.

Additionally, in the example of FIGURE 1, streaming multimedia presentation 103 is communicated between communication device E 17 and communication device F 18. In this example, communication device E 17 is a media server and communication device F 18 is a laptop computer. Of course, other devices suitable for sending and receiving a multimedia presentation may be used instead. As an example, multimedia presentation 103 may be an educational presentation which may include audio (e.g., voice communication from an instructor), video (e.g., video feed of the instructor), as well as such teaching aids as still images, pre-recorded videos and/or audio, etc. Multimedia presentation 103 provides an example of a unidirectional stream(e.g., a presentation streamed from communication device E 17 to communication device F 18 with no return stream).

Various other types of streaming media communications may be performed in addition to or instead of those specifically shown in FIGURE 1. In each case, a packet-based protocol, such as IP, is used for communicating the streaming communication over the packet-switched network. The packet-based protocol used includes a signaling portion used for control of the streaming communication. That is, a signaling protocol is utilized for control of the packet-based streaming communication. For instance, analogous to the well-known SS7 protocol commonly used for control of circuit-switched telephone calls, packet-based protocols used for communicating streaming media generally include similar signaling messages. SS7 is a global standard for telecommunications defined by the International Telecommunication Union (ITU) Telecommunication Standardization Sector (ITU-T), which defines the procedures and protocol by which network elements in the public-switched telephone network (PSTN) exchange information over a digital signaling network to effect wireless (cellular) and wirelihe call setup, routing and control. Thus, for example, the SS7 network and protocol are used for basic call setup, management, and tear down, among other control and management operations in a circuit-switched network. Similarly, a signaling protocol may be used for control of streaming media communications over a packet-switched network.

As an example of a signaling protocol commonly used for streaming media communications over a packet-switched network, the well-known H.225.0 protocol is used for many packet-based streaming communications, such as telephony communications (e.g., VoIP). Similarly, the well-known SIP, MGC, and MEGACO protocols include signaling components, and such protocols are commonly used for packet-based streaming communication (e.g., VoIP). For instance, a signaling protocol, such as H.225.0, is often used within a packet-switched network for setting up ("connecting" or "initiating") a streaming media session between the communicating parties, as well as for tearing down ("disconnecting" or "terminating") such streaming media session. Again, the actual messages of a given signaling protocol may not be referred to as "setup" or "teardown," but the corresponding messages for these functions are present.

In the example of FIGURE 1, the packet-based protocol used for streaming communication (e.g., telephony communication) 101 includes a signaling portion 101_{S} and a data portion 101_{D}. The signaling portion 101_{S} refers to the signaling messages used for control (e.g., setting up, tearing down, etc.) the streaming media session for this communication 101, which may utilize signaling protocol H.225.0, SIP, MGCP, MEGACO, etc., as examples. The data portion 101_{D} refers to the actual voice communication that is being streamed for this communication 101, which may utilize IP or other suitable packet-based protocol (e.g., RTP, Moving Picture Experts Group (MPEG) protocol, etc.) for communicating such data. Similarly, the packet-based protocol used for streaming communications 102 and 103, each include a signaling portion (102_{S} and 103_{S}, respectively) and a data portion (102_{D} and 103_{D}, respectively). In other words, each streaming communication has associated therewith a signaling protocol used for control of the streaming communication, as well as a data protocol used for the actual streaming data. Thus, the overall packet-based protocol used for communicating the streaming media over the packet-switched network 11 may be thought of as including both a data portion (e.g., the IP protocol) and a signaling portion (e.g., the H.225.0 protocol).

In accordance with embodiments of the present invention, the signaling messages associated with streaming communications are used for determining the demand placed on the packet-switched network 11 by such streaming communications that it carries. As described further below, the demand may be used, in certain embodiments, for constructing a traffic matrix for the packet-switched network 11. For instance, in the example of FIGURE 1, one or more probes, such as probe 40 is/are included in packet-switched network 11 for capturing the signaling messages 101_{S}, 102_{S}, and 103_{S} associated with streaming communications 101, 102, and 103, and uses the captured signaling messages for computing the demand placed on the packet-switched network 11 by such streaming communications 141, 102, and 103. In this example, the computed demand is used by probe 40 for constructing a traffic matrix 52 for packet-switched network 11. One or more of such probes 40 is/are arranged to receive the signaling messages (or a copy thereof) associated with streaming communications carried by the packet-switched network 11 and compute the demand placed thereon. As described further below, in certain embodiments a central processor (not shown in FIGURE 1) is included, which collects the demand information from the various probes and aggregates such information to generate traffic matrix 44.

In certain implementations, the H.323 standard is used for communicating streaming media, such as streams 101-103, over a packet-switched network 11. The H.323 standard provides a foundation for audio, video, and other streaming communications across IP-based networks, including the Internet. H.323 is an umbrella recommendation from the ITU that sets standards for multimedia communications over packet-switched networks that do not provide a guaranteed QoS. These packet-switched networks include packet-switched IP and IPX over Ethernet, Fast Ethernet, and Token Ring network technologies, as examples. H.323 is part of a larger series of communications standards that enable videoconferencing across a range of packet-switched networks. Known as H.32X, this series includes H.320 which addresses ISDN communications. H.323 defines four major components for a network-based communications system: 1) Terminals, 2) Gateways, 3) Gatekeepers, and 4) Multipoint Control Units. Terminals are the client endpoints on the network that provide real-time, two-way communications. In general, H.323 terminals support H.245, which is used to negotiate channel usage and capabilities, and the H.323 terminals also support three other components: 1) call signaling (e.g., H.225.0 call signaling), 2) a component known as Registration/Admission/Status (RAS), which is a protocol used to communicate with a Gatekeeper, and 3) support for real-time protocol (RTP)/real-time control protocol (RTCP) for sequencing audio and video packets. Optional components in an H.323 terminal include video codecs, T.120 data conferencing protocols, and MCU capabilities.

The H.323 Gateway is an optional element in an H.323 conference. H.323 Gateways provide many services, the most common being a translation function between H.323 conferencing endpoints and other terminal types. This function includes translation between transmission formats (i.e., H.225.0 to H.221) and between communications procedures (i.e., H.245 to H.242). In addition, the H.323 Gateway also translates between audio and video codecs and performs call setup and clearing on both the packet-switched and the circuit-switched network sides.

The H.323 Gatekeeper acts as the central point for all calls within its zone and provides call control services to registered endpoints. In many ways, an H.323 Gatekeeper acts as a virtual switch. H.323 Gatekeepers perform two important call control functions. The first is address translation from network aliases for terminals and gateways to IP or IPX addresses, as defined in the RAS specification. The second function is bandwidth management, which is also designated within RAS. For instance, if a network manager has specified a threshold for the number of simultaneous conference on the manager's packet-switched network, the Gatekeeper can refuse to make any more connections once the threshold is reached. The collection of all Terminals, Gateways, and Multipoint Control Units (MCUs) managed by a single Gatekeeper is known as an H.323 Zone. An optional feature of a Gatekeeper is the ability to route H.323 calls. A Gatekeeper capable of routing H.323 calls can, for example, help make decisions involving balancing among multiple gateways. While a Gatekeeper is logically separate from H.323 endpoints, vendors may incorporate Gatekeeper functionality into the physical implementation of Gateways and MCUs.

While the H.323 standard is used in certain embodiments for communicating streaming media over the packet-switched network, any other standard/protocol now known or later developed for communicating streaming media over a packet-switched network which utilizes signaling messages for control of the streaming media communication may be used with embodiments of the present invention. Further, any signaling protocol now known or later discovered may be used with embodiments of the present invention, and thus embodiments provided herein are not intended to be limited to the specific example signaling protocols identified herein, such as H.225.0, SIP, MGCP, MEGACO, and H.225.0.

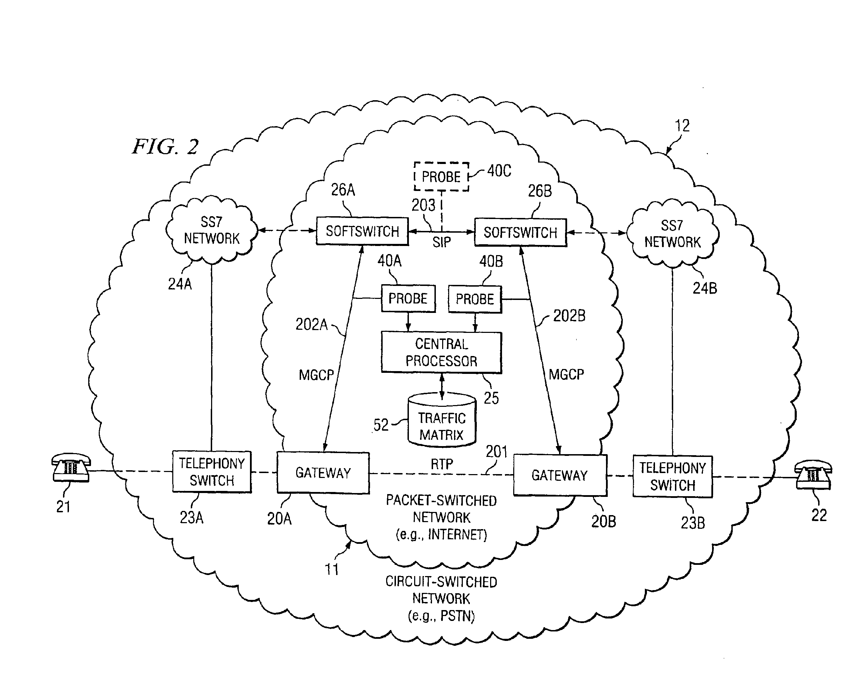

Turning to FIGURE 2, an example is shown in which circuit-switched network 12 and packet-switched network 11 interface with each other for supporting streaming media communication, such as telephony communication between parties 21 and 22. As shown, gateways are typically implemented to translate between the circuit-switched network 12 and packet-switched network 11. For example, voice communication from party 21 is carried by circuit-switched network (e.g., PSTN) 12 to gateway 20A whereat it is translated to packet-based streaming communication. The resulting packet-based streaming communication output by gateway 20A is carried by packet-switched network (e.g., the Internet) 11 to gateway 20B whereat it is translated back to circuit-switched communication, and the circuit-switched network 12 carries the streaming communication from gateway 20B to party 22.

Circuit-switched network 12, in this example, includes telephony switches 23A and 23B. Signaling network (SS7) 24A and 24B are also included for communication of accompanying signaling messages for the call conducted (at least partially) over circuit-switched network 12, including the call between parties 21 and 22. Further, in this example, a protocol (e.g., RTP) 201 is used to carry the actual voice data across packet-switched network 11. Further, signaling protocol(s) are used for carrying the accompanying signaling messages for the call conducted (at least partially) over packet-switched network 11. For instance, signaling messages (e.g., in MGCP protocol) 202A are communicated between gateway 20A and softswitch 26A, and signaling messages (e.g., in MGCP protocol) 202B are communicated between gateway 20B and softswitch 26B. Additionally, signaling messages (e.g., in SIP protocol) 203 are communicated between softswitches 26A and 26B. As described further below, an embodiment of the present invention captures such signaling messages and uses those signaling messages for computing demand and, in some instances, constructing a traffic matrix for packet-switched network 11.

In one embodiment, probes 40_{A} and 40_{B} are implemented to receive (a copy of) signaling messages 202A and 202B, respectively. For instance, probes 40_{A} and 40_{B} may each capture signaling messages 202A and 202B, and thus may each have at least a portion of the information that is capable of being used for computing the demand placed on the packet-switched network 11 by streaming communications, such as the streaming communication 201. The relevant information may be communicated from probes 40_{A} and 40_{B} to a central processor 25, which may use that information to compute a demand and, in some instances, generate a traffic matrix 52 for packet-switched network 11. As described further herein, probes 40_{A} and 40_{B} may timestamp received signaling messages (e.g., setup and teardown messages) in order to allow for the duration of corresponding streaming media sessions to be determined. Accordingly, techniques for synchronizing the clocks of such probes 40_{A} and 40_{B} may be implemented. For instance, in certain implementations, well-known techniques based on using global positioning systems (GPS) are used for synchronizing the clocks of each probe. In certain embodiments, rather than (or in addition to) probes 40_{A} and 40_{B} being arranged to capture MGCP signaling messages 202A and 202B, probes, such as probe 40_{C}, may be arranged to capture SIP signaling messages, such as SIP signaling messages 203, which are in turn used for computing demand.

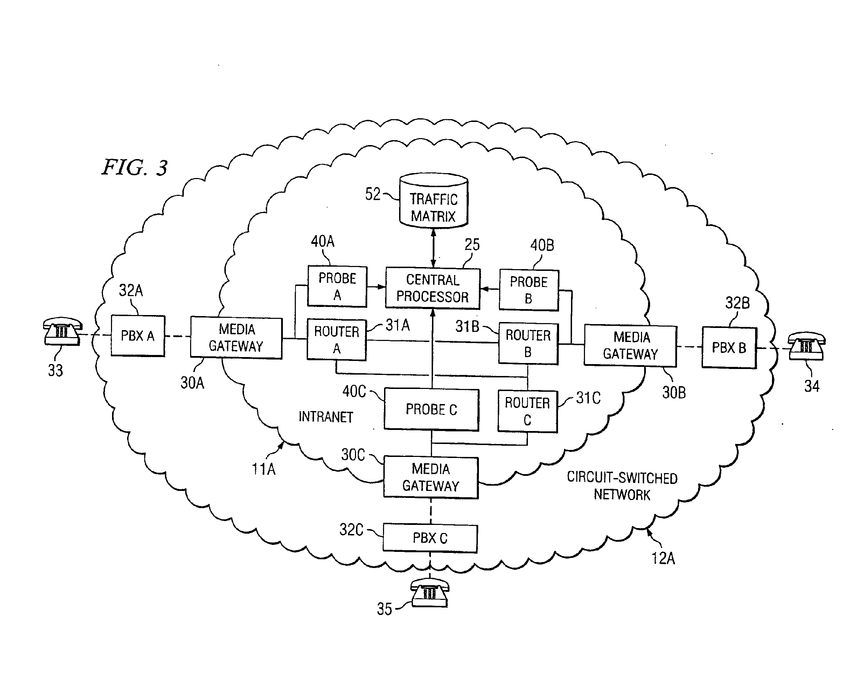

FIGURE 3 shows another example, which is commonly used for telephony communication within an enterprise (e.g., within a given company). In this example, a circuit-switched network 12A and packet-switched network (e.g., an intranet) 11A interface with each other for supporting streaming media communication, such as telephony communication between parties 33 and 34 in a first instance and telephony communication between parties 35 and 34 in a second instance. As shown, media gateways 30A, 30B, and 30C are implemented to translate between the circuit-switched network 12A and packet-switched network 11A. For example, in a first instance, party 33 calls party 34. Voice communication from party 33 is carried by circuit-switched network 12A to a private branch exchange (PBX) A 32A, which directs the communication to media gateway 30A whereat it is translated to packet-based streaming communication. The resulting packet-based streaming communication output by gateway 30A is carried by packet-switched network 11A to router A 31A which routes the communication to router B 31B. Router B 31B routes the communication to gateway 30B whereat it is translated back to circuit-switched communication and routed to PBX B 32B of circuit-switched network 12A, which routes the streaming communication to party 34.

Further in this example, in a second instance, party 35 calls party 34. Voice communication from party 35 is carried by circuit-switched network 12A to a private branch exchange (PBX) C 32C, which directs the communication to media gateway 30C whereat it is translated to packet-based streaming communication. The resulting packet-based streaming communication output by gateway 30C is carried by packet-switched network 11A to router C 31C which routes the communication to router B 31B. Router B 31 B routes the communication to gateway 30B whereat it is translated back to circuit-switched communication and routed to PBX B 32B of circuit-switched network 12A, which routes the streaming communication to party 34.

Probes 40_{A}, 40_{B}, and 40_{C} are shown in FIGURE 3, which monitor the signaling messages used for the streaming communications conducted over the packet-switched network 11A to compute the demand placed on the packet-switched network 11A by such streaming communications. In certain implementations, probes 40A-40C capture signaling messages associated with the streaming communications and use the signaling messages to either compute demand or to generate at least a portion of the information from which the demand may be computed. For instance, probes 40A-40C may timestamp certain received signaling messages and may communicate those timestamped messages to central processor 25, which may use the timestamped messages to compute the demand.

In certain implementations, the demand is used for constructing a traffic matrix 52. As mentioned above, the demand may be reflected in any of several different ways, including without limitation: a) the duration of streaming sessions (e.g., voice calls) conducted between various nodes of packet-switched network 11A (e.g., the total number of minutes of voice calls conducted between various nodes during a given interval of time), b) the bandwidth consumed between various nodes in supporting streaming communications, and c) the number of concurrent streaming sessions being conducted between various nodes at any given time. In certain embodiments, the captured signaling messages are used to compute the duration of calls conducted between various nodes (e.g., the call between parties 33 and 34 carried between media gateways 30A and 30B of packet-switched network 11A, and the call between parties 35 and 34 carried between media gateways 30C and 30B of packet-switched network 11A), and such duration of calls is used to compute the bandwidth consumed. The traffic matrix may include information reflecting the demand in any of these manners, such as reflecting total call durations between various nodes during a given time interval (e.g., total voice minutes during a given hour of time), total bandwidth consumed during the given time interval, and/or maximum number of concurrent streaming media sessions occurring between various nodes during the given time interval.

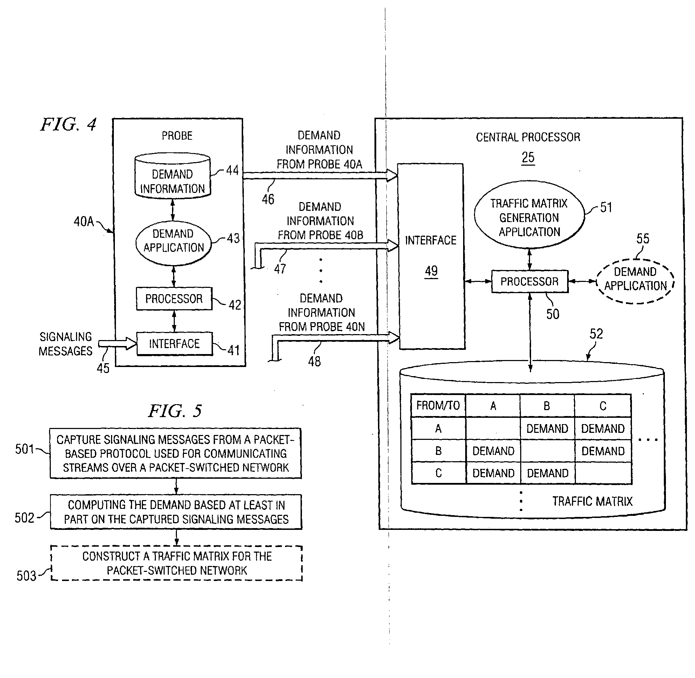

FIGURE 4 shows a block diagram of an example probe 40A and central processor 25. Probe 40A may be used in certain embodiments for capturing signaling messages associated with streaming media communication over a packet-switched network and determining, based at least in part on the captured signaling messages, certain "demand information" from which the demand placed on such packet-switched network may be computed. For instance, in certain embodiments, the probe 40A may be arranged within the packet-switched network to capture sufficient signaling messages as to compute a demand for streaming communications conducted between various nodes of the packet-switched network. As an example, probe 40_{C} of FIGURE 2 is arranged to capture SIP signaling messages 203 between softswitches 26A and 26B, which are sufficient to enable the probe 40_{C} to compute the demand placed on gateways 20A and 20B by streaming communication 201. In this case, the computed demands from each probe may be communicated to a central processor 25, which may aggregate the various computed demands to, for example, generate a traffic matrix and/or compute other information from the received computed demands (e.g., to convert one representation of demand, such a voice call duration, to another representation of demand, such as bandwidth). In other embodiments, the probe 40A may be arranged in the packet-switched network to capture a portion of the signaling messages from which demand may be computed, in which case the relevant portion from each probe may be communicated to a central probe that uses those portions to compute a demand. For example, probes 40_{A} and 40_{B} of FIGURE 2 are arranged to capture MGCP signaling messages 202A and 202B, wherein the demand information gathered by each of these probes may be used by a central probe 25 to compute the demand placed on gateways 20A and 20B by streaming communication 201. In this case, central probe 25 may compute one or more representations of the demand, such as call duration, bandwidth, maximum number of concurrent calls, etc., and aggregate the computed demands into a traffic matrix 52.

As shown in the example of FIGURE 4, probe 40A includes an interface 41 for receiving the signaling messages 45, such as signaling messages 101_{S}, 102_{S}, and 103_{S} of FIGURE 1. For instance, as in the example of FIGURE 2, probe 40A may be implemented to receive MGCP signaling messages (202A, 202B) or SIP signaling messages 203. As an example, in one embodiment, probe 40A is based on a computer containing a standard Network Interface Card (NIC). The NIC can be put in "promiscuous mode" so that it captures all packets that are sent to it, regardless of their intended destination. A network switch is placed between two routers in the IP network which carry the signaling messages and the switch is configured to copy all of the packets between the two routers to a port known as a "mirror port" (i.e. effectively receives via interface 41 copies of all the packets sent between the routers). Probe 40A then filters those packets and ignores all traffic except the signaling packets it is interested in.

Probe 40A further includes a processor 42 that is operable to execute software code 43 for processing the captured signaling messages 45. As described further herein, in certain implementations, software code 43 timestamps the received signaling messages and correlates the various signaling messages with the streaming media communication to which they relate. For instance, the signaling messages typically contain information such as the IP address of the source and destination media gateways that the voice channel of a VoIP call should pass between. They also typically include information on the Codec that should be used (e.g., G.711, G.729). The combination of Ingress IP address; Egress IP address, and Codec allows calls to be associated with a specific demand (e.g., a demand for a streaming communication session between callers 33 and 34, as well as a demand for a streaming communication session between callers 35 and 34). In this manner, software code 43 may compute the duration of each streaming media session. For instance, by using the timestamps of the correlated setup and tear down signaling messages captured for a given streaming media session, the duration of such streaming media session can be determined. Again, in certain embodiments, a given probe 40A may be arranged to receive only a portion of the signaling messages that are needed for computing a demand. In this case, demand application 43, identifies the relevant signaling messages, timestamps them, correlates them to a particular streaming session, and communicates this information to central processor 25, which may use the information from various probes to compute the demand.

The demand application 43 may store, at least temporarily, the demand information (e.g., a full computed demand for one or more streaming sessions, or relevant information that is usable in computing a demand) to a local data storage 44 (e.g., memory, floppy disk, hard disk, optical disk, etc.). The demand information 44 from probe 40A, as well as demand information from various other probes implemented, for monitoring a packet-switched network, is communicated to central processor 25. For instance, demand information 44 from probe 40A is communicated 46 to central processor 25. Similarly, demand information from a second probe 40B is communicated 47 to central processor 25. Demand information from any number "N" of probes that are implemented for monitoring a packet-switched network may be communicated in this manner to central processor 25, and thus FIGURE 4 shows communication 48 in which demand information from a probe 40N is communicated to central processor 25.

Central processor 25 includes an interface 49 for receiving the demand information from the various probes, such as demand information 44 from probe 40A. Central processor 25 further includes a processor 50. In some instances, processor 50 executes a demand application 55 on central processor 25 to compute demands placed on various nodes of the packet-switched network by streaming sessions conducted over the packet-switched network. For instance, in cases in which the probes are arranged to each capture a portion of the information needed for computing demand, central processor 25 may receive the various portions and use demand application 55 to compute the demands. As a further example, central processor 25 may use demand application 55 to convert a computed demand from one representation to another, such as from streaming session duration to bandwidth.

Additionally, in certain embodiments, central processor 25 includes a traffic matrix generation application 51 the is executable by processor 50 to generate traffic matrix 52. That is, in certain implementations, the demands placed on various elements of the packet-switched network may be constructed into a traffic matrix 52. For example, software code 51 may operate to construct a traffic matrix 52 that identifies the demand placed on elements A, B, and C for one or more intervals of time. Elements A, B, and C may each be a different access device (e.g., media gateway, router, etc.) of the packet-switched network, and thus the demands between each of these devices may be aggregated into a traffic matrix 52, which may be used by a streaming communication service provider to carry out traffic engineering and/or perform capacity planning, as examples. Again, the traffic matrix may represent the demand between the various nodes A, B, and C as total duration of actual data communication (e.g., voice duration of a VoIP communication) between each of the nodes during a given time interval of interest, bandwidth consumed by streaming sessions communicated between each of the nodes during the time interval of interest, and/or maximum number of concurrent streaming media sessions communicated between each of the nodes during the time interval of interest, as examples.

Turning to FIGURE 5, an example operational flow diagram for one embodiment is shown. As shown, signaling messages of a packet-based protocol used for communicating streams over a packet-switched network are captured in operational block 501. For instance, with VoIP telephony communication, the actual streaming data (voice) is typically carried via RTP (e.g., RTP 201 of FIGURE 2) and the associated signaling messages are carried using a signaling protocol (e.g., SIP, MGCP, MEGACO, etc., such as MGCP messages 202A, 202B and SIP messages 203 of FIGURE 2). In this instance, the signaling messages are captured by a probe (such as probe 40A of FIGURE 4) in operational block 501. In operational block 502, the captured signaling messages are used to compute the demand placed on the packet-switched network by the corresponding streaming media communications. As described above, the demand may be computed by the capturing probe in certain implementations, and in other implementations the demand is computed by a central processor, such as central processor 25 of FIGURE 4. In certain implementations, the computed demands placed on the packet-switched network are used to construct a traffic matrix 52 for the packet-switched network, in operational block 503.

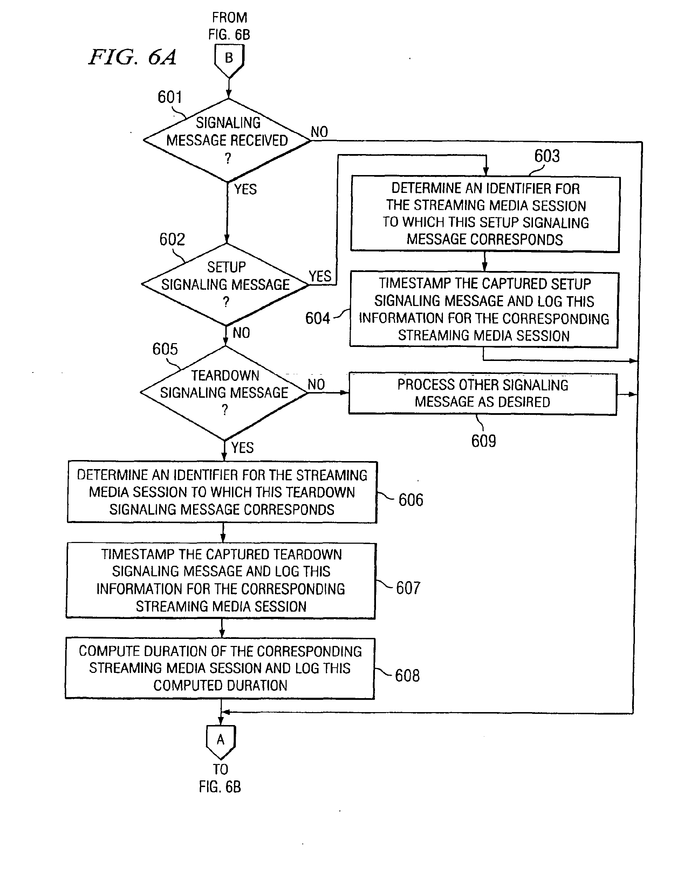

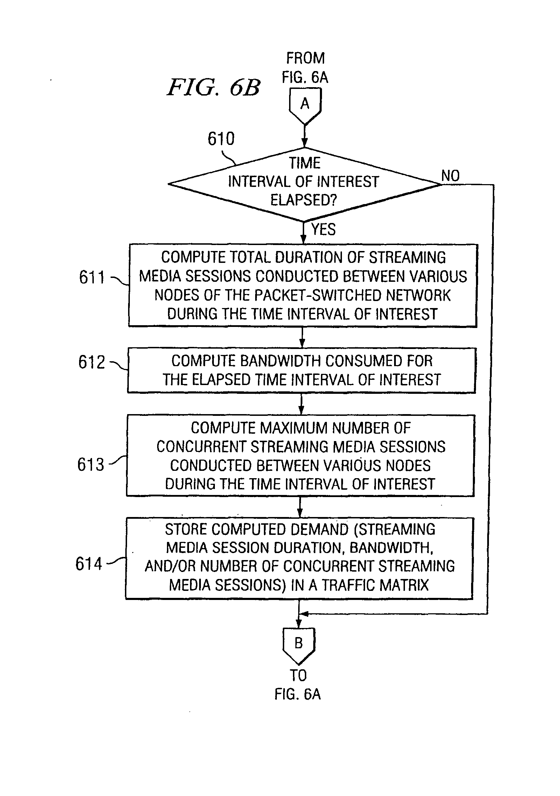

FIGURES 6A-6B show a more detailed operational flow for one embodiment of the present invention for computing the demand placed on a packet-switched network by streaming media communications. In operational block 601, a probe (such as probe 40A of FIGURE 4) determines whether it has received a new signaling message for streaming media communication being carried over a packet-switched network. If a new message is not received, operation advances to block 610, which is described further below. If a new message is received in block 601, operation advances to block 602 whereat the probe determines whether the signaling message is a setup message (i.e., for initiating a new streaming media session). If the received message is a setup message, operation advances to block 603 whereat the probe determines an identifier for the streaming media session to which this setup message corresponds. Typically, an identifier for the streaming media session to which the signaling message relates is included with the signaling message, and the probe may use this identifier of the signaling message in block 603. In operational block 604, the probe timestamps the captured setup signaling message and logs this information for the corresponding streaming media session. Of course, in alternative embodiments, the order in which the various operations shown in FIGURES 6A-6B are performed may be modified. For instance, in certain embodiments, upon a signaling message being received, it may immediately be timestamped before any other actions are performed (e.g., to accurately timestamp the time the signaling message is received). From block 604, operation advances to block 610, which is described further below.

If determined in block 602 that the received signaling message is not a setup signaling message, then operation advances to block 605 whereat the probe determines whether the signaling message is a teardown message (i.e., for terminating a streaming media session). If the received message is a teardown message, operation advances to block 606 whereat the probe determines an identifier for the streaming media session to which this teardown message corresponds. Again, an identifier for the streaming media session to which the signaling message relates is typically included with the signaling message, and the probe may use this identifier in its performance of block 606. In operational block 607, the probe timestamps the captured teardown signaling message and logs this information for the corresponding streaming media session. As mentioned above, in alternative embodiments, the order in which the various operations shown in FIGURES 6A-6B is performed may be modified. For instance, in certain embodiments, upon a signaling message being received, it may immediately be timestamped before any other actions are performed (e.g., to accurately timestamp the time the signaling message is received). In operational block 608, the timestamps of the correlated setup and teardown signaling messages for the corresponding streaming media session are used to compute the duration of such streaming media session, and this computed duration is logged. As mentioned above, in certain embodiments, the duration is computed and logged by central processor 25. For instance, the timestamped information from blocks 604 and 607 may be communicated from probes to a central processor, which may use this information to compute the duration of the streaming session. From block 608, operation advances to block 610, which is described further below.

If determined in block 605 that the received signaling message is not a teardown signaling message, then operation advances to block 609 whereat the probe may process the received signaling message in any desired manner. In certain embodiments, the probe may ignore signaling messages not related to setup or teardown of a streaming media session. In certain embodiments additional signaling messages may be processed. For instance, in H.323, for example, the Answer message identifies when the voice portion of a call beings, and the Facility message identifies which Codec was negotiated for the call. In certain embodiments, these further signaling messages may be processed to, for example, determine the duration of the Voice portion of a call and/or determine the efficiency of the Codec utilized. From block 609 of FIGURE 6A, operation advances to block 610 of FIGURE 6B, which is described below.

In operational block 610, the probe (or central processor) determines whether a time interval of interest has elapsed. For instance, in certain embodiments, the probe (or central processor) may determine the demands placed on the packet-switched network for a given interval of time, such as for an hour. Further, the demands may be maintained for a plurality of such intervals of time. For instance, the demands may be computed for an hourly interval for each hour of a day, week, month, etc. If the time interval of interest (e.g., hourly interval) has not elapsed, then operation returns to block 601 to continue to monitor for signaling messages received during this interval of interest. If determined in block 610 that the time interval of interest has elapsed, operation advances to block 611 whereat the probe (or central processor) computes the total duration of streaming media sessions conducted between various nodes of the packet-switched network during the time interval of interest. For instance, with reference to the example of FIGURE 3, the information from various probes may be used to compute the total duration of streaming media sessions conducted between media gateways 30A and 30B, the total duration of streaming media sessions conducted between media gateways 30B and 30C, and the total duration of streaming media sessions conducted between media gateways 30A and 30C.

In operational block 612, the bandwidth consumed for the elapsed time interval of interest may is determined in certain embodiments. An example of computing such bandwidth is described further herein below. For instance, with reference to the example of FIGURE 3, the total duration of streaming media sessions conducted between media gateways 30A and 30B may be used to compute the bandwidth consumed between such media gateways 30A and 30B during the time interval of interest; the total duration of streaming media sessions conducted between media gateways 30B and 30C may be used to compute the bandwidth consumed between such media gateways 30B and 30C during the time interval of interest; and the total duration of streaming media sessions conducted between media gateways 30A and 30C may be used to compute the bandwidth consumed between such media gateways 30A and 30C during the time interval of interest.

In certain embodiments, the maximum number of concurrent streaming media sessions conducted between various nodes during the time interval of interest is computed in block 613. For instance, again with reference to the example of FIGURE 3, the maximum number of concurrent streaming media sessions encountered between media gateways 30A and 30B during the time interval of interest may be determined; the maximum number of concurrent streaming media sessions encountered between media gateways 30B and 30C during the time interval of interest may be determined; and the maximum number of concurrent streaming media sessions encountered between media gateways 30A and 30C during the time interval of interest may be determined.

Then, in certain embodiments, the computed demand (e.g., computed total duration of streaming media sessions between various nodes, bandwidth, and/or maximum number of concurrent streaming media sessions encountered between various nodes) is stored to a traffic matrix in operational block 614, resulting in a traffic matrix such as the example traffic matrix 52 of FIGURE 4. Operation then returns to block 601 to continue monitoring for receipt of signaling messages.

It should be understood that while shown in FIGURES 6A-6B as a serial flow, for ease of illustration, the various operations may in actuality be performed in parallel. For instance, a signaling message may be received by the probe and recognized in block 601 (and timestamped) while the probe (or central processor) is computing the duration of a streaming media session (in block 608) and/or while the probe (or central processor) is computing demand and/or bandwidth consumed during an elapsed time interval of interest (in blocks 611 and 612) and/or while the central processor is constructing a traffic matrix (in block 613).

Service Providers using packet-switched networks (e.g., IP networks) for providing streaming media communication services (e.g., telephony, videoconferencing, etc.) generally desire to ensure that the QoS of their product offerings meet their customers' expectations. To do this, it becomes desirable for the service providers to ensure that their network has sufficient capacity to satisfy their customers' needs. Accordingly, it is desirable for the service providers to accurately measure the demand placed on the network by their customers in order to compare the demand with the available capacity and identify potential "hot spots" and performance problems within the network. Using the techniques described above, service providers can analyze and properly engineer their network to meet their customers' demands and plan for future network growth.

The introduction of technologies such as Multi Protocol Label Switching (MPLS) to packet-switched networks (e.g., IP networks) is giving Service Providers greater flexibility in engineering their networks. These technologies allow service providers to handle QoS sensitive traffic, such as VoIP, differently than traditional IP best-effort mechanisms. In order to make effective use of these technologies, Service Providers need a good understanding of the traffic demands being placed on their networks. Embodiments of the present invention allow Service Providers to compute the demand placed on their packet-switched networks and construct traffic matrices, which the Service Providers can advantageously use for evaluating the capacity of their networks and for properly engineering their networks and better utilize existing capacity.

As described above, by capturing signaling messages associated with streaming media sessions (e.g., VoIP calls), a record of each session (e.g., each VoIP call) can be built up. Such Call Flow Records (CFRs) may contain such information as the source and destination of each streaming media session, its duration, and the codecs used by the session. As an example of computing an individual VoIP demand, all of the Call Flow Records that share the same ingress router, egress router, and codecs during a specified interval of time (e.g. a one hour window) may be aggregated. The resultant demand may contain, for example, the number of voice minutes of all calls between the ingress/egress router pair within the specified interval for a particular codec. The set of all of the VoIP demands for all ingress/egress router pairs and codecs in a specified time interval is referred to as a VoIP traffic matrix. Thus, the computed VoIP demands for the ingress/egress router pairs and codecs may be used for constructing such as VoIP traffic matrix.

Traffic Matrices are typically captured hourly for telephony traffic, and are used to identify what is commonly know as the "busy hour," i.e., the hour of the day when the most demand is seen on the network. Network operators typically engineer their networks based on the demands captured during the busy hour.

As further mentioned above, each computed demand (e.g., a VoIP demand, which is captured as the number of call minutes during a demand interval) can be transformed into a corresponding bandwidth demand. These bandwidth demands can then be satisfied by using technologies such as MPLS to reserve paths through the network that have sufficient bandwidth to meet the demand. The transformation from a VoIP demand to a bandwidth demand may be done by utilizing a traffic model, such as Erlang B, to predict the number of voice circuits needed to support the demand and then multiplying that by the bandwidth requirements of a call with the specified codes. For example, assume that we have identified a demand of 5 Erlangs (18000 minutes) during the busy hour for VoIP calls using the G.711 codec with a 10 millisecond payload, between two routers Router_{A} and Router_{B}. Using the Erlang B traffic model and assuming a call-blocking rate of 1 % would lead us to conclude that 11 circuits are required to satisfy this demand. The bandwidth requirements of a VoIP call utilizing the G.711 (10 msecs) codec is approximately 35.6 Kilobits per second; therefore, the overall bandwidth requirements of the demand is approximately 942 Kilobits per second, in this example.

In addition to aggregating VoIP calls by the combination of ingress router, egress router and codec it may also be desirable to include additional fields contained within the Call Flow Records when constructing a demand. For example, if calls are additionally aggregated by the identity of the customer placing the call, then the resultant demands are also useful as customer usage records, since each demand is now specific to a particular customer. Other example attributes by which Call Flow Records can be aggregated include: Carrier (e.g. AT&T, Verizon, etc.), Softswitch address, destination, and called party number. Note that these examples are intended to be representative of the kinds of aggregation that could be done, and are not an exhaustive list.

Although the present invention and its advantages have been described in detail, it should be understood that various changes, substitutions and alterations can be made herein without departing from the invention as defined by the appended claims. Moreover, the scope of the present application is not intended to be limited to the particular embodiments of the process, machine, manufacture, composition of matter, means, methods and steps described in the specification. As one will readily appreciate from the disclosure, processes, machines, manufacture, compositions of matter, means, methods, or steps, presently existing or later to be developed that perform substantially the same function or achieve substantially the same result as the corresponding embodiments described herein may be utilized. Accordingly, the appended claims are intended to include within their scope such processes, machines, manufacture; compositions of matter, means, methods, or steps.

## Claims

1. A method comprising:
capturing (501) signaling messages (101_{S}, 102_{S}, 103_{S}) associated with streaming media (101, 102, 103) communicated over a packet-switched network (11); and
computing (502), based at least in part on said captured signaling messages, a demand placed on said packet-switched network.

2. A method of monitoring a packet-switched network, the method comprising:
for at least one interval of time, capturing (601) signaling messages (101_{S}, 102_{S}, 103_{S}) of streaming media sessions (101, 102, 103) communicated over a packet-switched network (11);
identifying (603, 606) a streaming media session to which each signaling message corresponds; and
determining the duration (608) of each streaming media session based on said captured signaling messages.

3. A probe comprising:
at least one interface (41) for receiving signaling messages (45) of a packet-based protocol that is used for communicating streaming media (101, 102, 103) over a packet-switched network (11); and
processor (42) operable to determine, based at least in part on the captured signaling messages, at least a portion of information (44) from which a demand placed on said packet-switched network by said streaming media can be computed.

4. A system comprising:
a plurality of probes (40A, 40B) arranged within a packet-switched network (11) for capturing signaling messages (202A, 202B) for streaming media (201) communicated over said packet-switched network, wherein said probes determine, from the captured signaling messages, demand information; and
a central processor (25) at least temporarily communicatively coupled to each of the plurality of probes for receiving the determined demand information (46, 47).

5. The method of claim 1 wherein said capturing comprises:
capturing said signaling messages for at least one streaming media session.

6. The method of claim 5 wherein said at least one streaming media session comprises a Voice over IP (VoIP) call between at least two parties, the method of claim 2 wherein said streaming media sessions comprise a VoIP call, the probe of claim 3 wherein said streaming media comprises a VoIP call, or the system of claim 4 wherein said streaming media comprises a VoIP call.

7. The method of claim 1, the method of claim 2, the probe of claim 3, or the system of claim 4 wherein said signaling messages are of a protocol selected from the group consisting of:
SIP, MGCP, MEGACO, and H.225.0.

8. The method of claim 1 or the probe of claim 3 wherein said computed demand comprises:
duration of said streaming media communicated over said packet-switched network.

9. The method of claim 1 or the probe of claim 3 wherein said computed demand comprises:
bandwidth consumed by said streaming media communicated over said packet-switched network.

10. The method of claim 1 or the probe of claim 3 wherein said computed demand comprises:
information regarding how many concurrent streaming media sessions are communicated over said packet-switched network.
